(19) Europäisches Patentamt / European Patent Office / Office européen des brevets

(11) **EP 4 564 309 A1**

(12) **DEMANDE DE BREVET EUROPEEN**

(43) Date de publication:
**04.06.2025  Bulletin 2025/23**

(21) Numéro de dépôt: **24216178.4**

(22) Date de dépôt: **28.11.2024**

(51) Classification Internationale des Brevets (IPC):
*G06V 10/28* (2022.01)   *G06V 10/44* (2022.01)
*G06V 10/82* (2022.01)   *G06V 20/60* (2022.01)
*G06T 7/00* (2017.01)    *G06T 7/13* (2017.01)
*G06T 7/12* (2017.01)    *G06T 7/136* (2017.01)

(52) Classification Coopérative des Brevets (CPC):
**G06V 10/82; G06T 7/12; G06T 7/136; G06V 10/28; G06V 10/44; G06V 20/60**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.11.2023  FR 2313181**

(71) Demandeur: **Commissariat à l'Energie Atomique et aux Energies Alternatives**
**75015 Paris (FR)**

(72) Inventeur: **STEPEC, Murielle**
**38054 GRENOBLE CEDEX 09 (FR)**

(74) Mandataire: **Lavoix**
**2, place d'Estienne d'Orves**
**75441 Paris Cedex 09 (FR)**

(54) **PROCÉDÉ DE DÉTECTION DE MODULES PHOTOVOLTAÏQUES SUR UNE IMAGE**

(57) La présente invention concerne un procédé de détection de modules photovoltaïques sur une image, le procédé comprenant :

a. la réception d'une image initiale de modules photovoltaïques,

b. la détection grossière, par un modèle, d'au moins un module photovoltaïque imagé entièrement sur l'image initiale et la mise en évidence dudit module photovoltaïque sur l'image initiale par une forme englobante,

c. la détermination d'un masque de contours pour chaque module photovoltaïque détecté sur l'image initiale en fonction de la forme englobante, et

d. l'application de chaque masque de contours déterminé sur l'image initiale pour détecter de manière fine le module photovoltaïque correspondant.

FIG.1

**Description**

La présente invention concerne un procédé de détection de modules photovoltaïques sur une image. La présente invention concerne aussi un produit programme d'ordinateur associé.

Le contrôle de l'état de modules photovoltaïques d'une centrale photovoltaïque est une étape clé pour détecter des défauts sur les modules ou anticiper d'éventuelles actions de maintenance, qui pourraient affecter la production énergétique de la centrale. En effet, la baisse de production au niveau des modules photovoltaïques peut provenir de défauts électriques, d'ombrage ou de salissures sur les modules photovoltaïques.

Idéalement, pour diagnostiquer ces phénomènes et proposer une aide décisionnelle, il convient de pouvoir détecter tous les modules photovoltaïques de la centrale et également, de déterminer précisément leurs contours, car une baisse de production peut provenir d'un problème situé en extrémité du module comme par exemple les boites de jonction.

L'état de l'art actuel pour la détection des modules photovoltaïques sur des images est réalisé soit par des méthodes de détection de seuils, soit par des méthodes de détection par réseaux de neurones.

Cependant, les méthodes de détection de seuils ne permettent pas une bonne détection des contours des modules (masques des modules non précis). En outre, elles imposent généralement de renseigner des mesures relatives aux modules. Or, comme les masques des modules ne sont pas précis, la position des centres des modules n'est pas non plus précise, et il arrive alors qu'il y est un décalage entre le contour réel du module et le contour du module détecté.

Les méthodes de détection par réseaux de neurones sont, quant à elles, performantes pour la détection des éléments, mais ne sont pas non plus satisfaisantes dans le cadre d'une recherche précise de contours.

Il existe donc un besoin pour un moyen permettant de détecter de manière plus précise les modules photovoltaïques présents sur une image.

A cet effet, l'invention a pour objet un procédé de détection de modules photovoltaïques sur une image, le procédé étant mis en oeuvre par ordinateur et comprenant les étapes suivantes :

a. la réception d'une image initiale de modules photovoltaïques,
b. la détection grossière, par un modèle, d'au moins un module photovoltaïque imagé entièrement sur l'image initiale et la mise en évidence dudit module photovoltaïque sur l'image initiale par une forme englobante, la forme englobante englobant au moins une partie du module photovoltaïque,
c. la détermination d'un masque de contours pour chaque module photovoltaïque détecté sur l'image initiale, l'étape de détermination comprenant pour chaque module photovoltaïque détecté :

i. l'agrandissement de la forme englobante d'un facteur prédéterminé de sorte à obtenir une forme, dite forme agrandie, englobant un seul module photovoltaïque dans son intégralité, dit module central,
ii. le traitement d'une image, dite image réduite, correspondant à la forme agrandie, le traitement comprenant la binarisation de l'image réduite et la détection des contours du module central sur l'image binarisée ,
iii. la détermination d'un masque de contours pour le module photovoltaïque en fonction des contours détectés pour le module central,

d. l'application de chaque masque de contours déterminé sur l'image initiale pour détecter de manière fine le module photovoltaïque correspondant.

Suivant d'autres aspects avantageux de l'invention, le procédé comprend une ou plusieurs des caractéristiques suivantes, prises isolément ou suivant toutes les combinaisons techniquement possibles :

- le modèle est un réseau de neurones qui a été préalablement entraîné sur une base de données comprenant des images de modules photovoltaïques ;
- le traitement de l'image réduite comprend la transformation de l'image réduite en niveaux de gris et le floutage de l'image transformée ;
- le traitement de l'image réduite comprend le renforcement des contours blancs sur l'image floutée ;
- la binarisation de l'image réduite est effectuée par un seuillage auto-adaptatif dont le seuil de décision est déterminé par la médiane et la moyenne des pixels de l'image réduite ;
- les contours détectés du module central correspondent à un quadrilatère ayant une aire comprise entre 60 % et 95 % de l'image binarisée ;
- le facteur prédéterminé est choisie de sorte que la forme agrandie ait une surface inférieure à deux fois la surface d'un module photovoltaïque ;
- l'agrandissement de la forme englobante comprend l'agrandissement des côtés de la forme englobante du facteur prédéterminé, de préférence le facteur prédéterminé étant égal à $\sqrt{2}$ ;
- le contraste de l'image initiale a été ajusté, avant l'étape de détection grossière, par un étalement d'histogramme adaptatif de l'image initiale ; et
- le procédé comprend une étape d'extraction d'une image de chaque module photovoltaïque en fonction du masque de contours dudit module photovoltaïque, et une étape d'application d'un ou plusieurs masques signature de défauts sur les images extraites afin d'identifier des défauts sur les modules photovoltaïques détectés.

L'invention concerne également un produit programme d'ordinateur comprenant des instructions de programme enregistrées sur un support lisible par ordinateur, pour l'exécution d'un procédé de détection tel que décrit précédemment, lorsque le programme d'ordinateur est exécuté sur un ordinateur.

La présente description concerne aussi un support lisible d'informations sur lequel est mémorisé un produit programme d'ordinateur tel que précédemment décrit.

L'invention apparaîtra plus clairement à la lecture de la description qui va suivre, donnée uniquement à titre d'exemple non limitatif, et faite en référence aux dessins dans lesquels :

Figure 1, une vue schématique d'un exemple d'ordinateur permettant la mise en oeuvre d'un procédé de détection de modules photovoltaïques sur une image,

Figure 2, un organigramme d'un exemple de mise en oeuvre d'un procédé de détection de modules photovoltaïques sur une image,

Figure 3, une représentation schématique d'un exemple d'une image initiale sur laquelle un module photovoltaïque a été mis en évidence par une forme englobante,

[Figure 4, une représentation schématique d'un exemple d'une image réduite de l'image initiale de la figure 3, l'image réduite correspondant à la forme englobante agrandie d'un facteur prédéterminé,

Figure 5, une représentation schématique d'un exemple d'une image binarisée de l'image réduite de la figure 4,

Figure 6, une représentation schématique d'un exemple des contours du module central sur l'image binarisée,

Figure 7, une représentation schématique d'un exemple d'un masque de contours obtenu à partie des contours détectés de la figure 6, et

Figure 8, une représentation schématique d'un exemple de l'application du masque de contours de la figure 7 sur l'image initiale, suivie de l'extraction de l'image du module photovoltaïque.

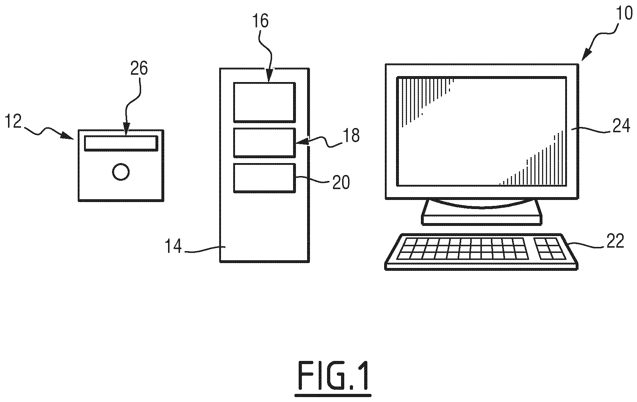

Un calculateur 10 et un produit programme d'ordinateur 12 sont illustrés par la figure 1.

Le calculateur 10, est de préférence, un ordinateur.

Plus généralement, le calculateur 10 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission ou de mémorisation.

Le calculateur 10 est en interaction avec le produit programme d'ordinateur 12.

Comme illustré par la figure 1, le calculateur 10 comporte un processeur 14 comprenant une unité de traitement de données 16, des mémoires 18 et un lecteur 20 de support d'informations. Dans l'exemple illustré par la figure 1, le calculateur 10 comprend un clavier 22 et une unité d'affichage 24.

Le produit programme d'ordinateur 12 comporte un support d'informations 26.

Le support d'information 26 est un support lisible par le calculateur 10, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy dise* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en oeuvre d'un procédé de détection de modules photovoltaïques $M_{PV}$ sur une image, lorsque le programme d'ordinateur 12 est mis en oeuvre sur l'unité de traitement 16 du calculateur 10.

En variante, le calculateur 10 est sous la forme d'une carte électronique comprenant des microcontrôleurs, ou de circuits intégrés.

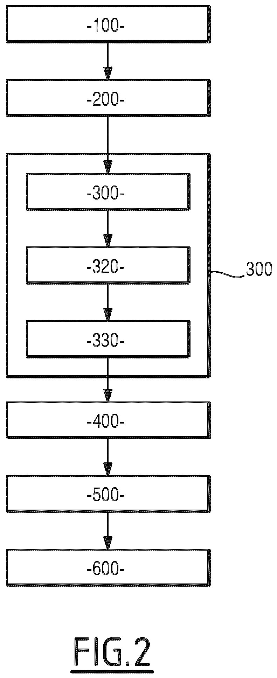

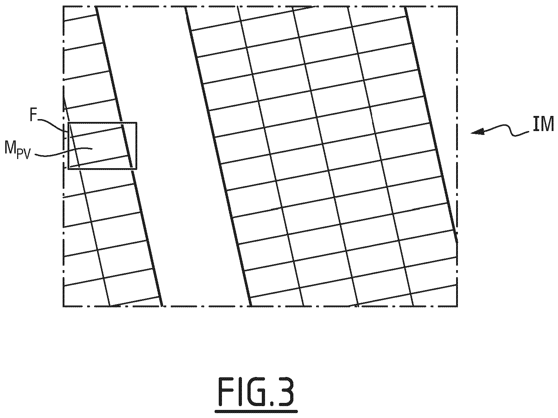

Le fonctionnement du calculateur 10 va maintenant être décrit en référence à la figure 2, qui illustre schématiquement un exemple de mise en oeuvre d'un procédé de détection de modules photovoltaïques $M_{PV}$ sur une image, et aux figures 3 à 8 qui illustrent des exemples d'étapes du procédé.

Chaque module photovoltaïque $M_{PV}$ (ou panneau photovoltaïque) est formé de l'assemblage de cellules photovoltaïques. Les modules photovoltaïques $M_{PV}$ appartiennent, par exemple, à une centrale photovoltaïque.

Le procédé de détection comprend une étape 100 de réception d'une image initiale IM de plusieurs modules photovoltaïques $M_{PV}$ (ou une image de centrale photovoltaïque). L'étape 100 est mise en oeuvre par le calculateur 10 en interaction avec le produit programme d'ordinateur 12, c'est-à-dire est mise en oeuvre par ordinateur.

L'image initiale IM est de préférence une image vue du ciel. Par le terme « vue du ciel », il est entendu que les images ont été prises d'un point de vue élevé permettant, par exemple, d'imager les toits de bâtiments.

L'image initiale IM a, par exemple, été acquise par un système satellite. En variante, l'image initiale IM a été acquise par un système d'acquisition, comprenant une ou plusieurs caméras, monté sur un aéronef ou un drone.

L'image initiale IM est, par exemple, une image en couleurs (RGB de l'anglais « Red Green Blue », traduit en français par Rouge Vert Bleu).

En variante, l'image initiale IM est une image en niveaux de gris, ou une image infrarouge, ou encore une image électroluminescente.

Le procédé de détection comprend une étape 200 de détection grossière, par un modèle, d'au moins un module photovoltaïque $M_{PV}$ imagé entièrement sur l'image initiale IM et la mise en évidence dudit module photovoltaïque $M_{PV}$ sur l'image initiale IM par une forme englobante F. La détection grossière permet une détection de l'emplacement d'un module photovoltaïque $M_{PV}$, mais sans détection précise des contours du module photovoltaïque $M_{PV}$. L'étape 200 est mise en oeuvre par le calculateur 10 en interaction avec le produit programme d'ordinateur 12, c'est-à-dire est mise en oeuvre par ordinateur.

La forme englobante F englobe au moins une partie du module photovoltaïque $M_{PV}$, de préférence au moins les trois quarts de la surface du module photovoltaïque $M_{PV}$.

La forme englobante F est, par exemple, un rectangle. En variante, la forme englobante F est un cercle ou toute autre forme géométrique.

Un exemple d'une image initiale IM avec en superposition une forme englobante F (rectangle) englobant un module photovoltaïque $M_{PV}$ est illustrée par la figure 3.

De préférence, le contraste de l'image initiale IM a été ajusté, avant l'étape de détection grossière, par un étalement d'histogramme adaptatif de l'image initiale IM. Cela permet de rendre plus visible les modules photovoltaïques $M_{PV}$ sur l'image initiale IM.

Par exemple, l'étalement d'histogramme est réalisé de la manière suivante. On divise l'image en « blocs » de taille fixe, par exemple 16*16, et l'on fixe une limitation de contraste sur cette zone (par exemple inférieure à 50). Dans chacun de ces blocs on effectue une égalisation d'histogramme :

Soit 255, le nombre de valeurs des pixels de l'image. On définit $n_k$ le nombre d'occurrences de la valeur de pixel $x_k$.
A chaque pixel de valeur $x_k$, on associe une nouvelle valeur $s_k$ tel que :

$$s_k = \frac{255}{nombre\ de\ pixel\ de\ l'image} \sum_{j=0}^{k} n_j$$

Sur le nouvel histogramme obtenu, si une valeur est au-dessus du contraste maximum le nombre d'occurrences supérieures est uniformément redistribué sur l'ensemble des valeurs de l'histogramme. Finalement, on effectue ces opérations sur tous les blocs de l'image.

Dans un exemple de réalisation, le modèle est un réseau de neurones qui a été préalablement entraîné sur une base de données comprenant des images de modules photovoltaïques $M_{PV}$.

Les images de la base de données sont de même nature que l'image initiale IM (ex : image infrarouge si l'image initiale IM est une image infrarouge, ou images en couleurs si l'image initiale IM est une image en couleurs, etc).

Un exemple d'entraînement du modèle va maintenant être décrit.

Dans cet exemple, les images de la base de données sont des images infrarouges imageant des modules photovoltaïques $M_{PV}$ avec des inclinaisons variables, ainsi que des éléments perturbateurs de la détection. La base de données d'entraînement utilisée comprend 2304 images (2048 pour l'entraînement et la validation et 256 pour le test). La base de données comprend les images, ainsi que les cibles qui sont, dans ce cas, des rectangles circonscrits aux modules photovoltaïques $M_{PV}$ (coordonnées du centre + largeur + hauteur).

Dans cet exemple, le modèle est basé sur un algorithme de segmentation d'instances, tel que l'algorithme YOLO (en l'occurrence YOLO V8). L'entraînement est réalisé par batch avec un algorithme de descente de gradients, en l'occurrence l'algorithme SGDM (descente de gradient stochastique avec inertie).

Dans cet exemple, les performances du réseau de neurones sont évaluées en utilisant la métrique MAP (de l'anglais « Mean Average Précision », traduit en français par « Moyenne moyenne précision »). On considère qu'une détection est correcte si elle est supérieure à un seuil (appelé IoU) que l'on fixe dans notre cas à 0,5. Il correspond au rapport entre la surface à l'intersection du rectangle détecté et celle du rectangle circonscrit attendu sur la surface de l'union de ces 2 rectangles. La précision est le rapport de détection correctes sur toutes les détections faites par le réseau, c'est la capacité du réseau à faire de bonnes prédictions. Le rappel est le rapport de détection correctes sur tous les modules photovoltaïques présents, c'est la capacité du réseau à détecter les modules photovoltaïques. L'aire en dessous de la courbe de la précision en fonction du rappel, fournit un indicateur de précision moyenne du modèle, nommée AP (average précision).

Dans cet exemple, le modèle est également évalué à l'aide de la métrique $MAP_{0,5\ 0,95}$ qui est la moyenne des MAP avec des seuils de décision allant de 0,5 à 0,95 avec un pas de 0,05. Nous avons entraîné notre réseau de neurones à détecter uniquement les modules entiers de l'image. On a obtenu une détection de 100% des modules photovoltaïques, une MAP = 0,971 et une $MAP_{0,5\ 0,95}$ = 0,55.

Le procédé de détection comprend une étape 300 de détermination d'un masque de contours Mc pour chaque module photovoltaïque $M_{PV}$ détecté sur l'image initiale IM. L'étape 300 est mise en oeuvre par le calculateur 10 en interaction avec le produit programme d'ordinateur 12, c'est-à-dire est mise en oeuvre par ordinateur.

L'étape de détermination 300 comprend une sous-étape 310 d'agrandissement de la forme englobante F d'un facteur prédéterminé de sorte à obtenir une forme, dite forme agrandie, englobant un seul module photovoltaïque $M_{PV}$ dans son intégralité, dit module central $M_{PV-C}$. La forme agrandie a donc une surface supérieure à la surface d'un module photovoltaïque $M_{PV}$.

Avantageusement, le facteur prédéterminé est choisi de sorte que la forme agrandie ait une surface inférieure à deux fois la surface d'un module photovoltaïque $M_{PV}$. Cela permet que la forme agrandie englobe seulement un seul module photovoltaïque $M_{PV}$ dans son intégralité.

Dans un exemple de réalisation, l'agrandissement de la forme englobante F comprend l'agrandissement des côtés de la forme englobante F du facteur prédéterminé (par exemple lorsque la forme englobante F est un rectangle). Le facteur prédéterminé est par exemple égal à $\sqrt{2}$.

En variante, le facteur prédéterminé est tel que les côtés de la forme agrandie sont agrandis d'une valeur comprise entre 5 % et 40 % de la valeur d'un côté de la forme englobante F, de préférence comprise entre 8 % et 15 % de la valeur d'un côté de la forme englobante F.

L'étape de détermination 300 comprend une sous-étape 320 de traitement d'une image, dite image réduite $IM_R$, correspondant à la forme agrandie de sorte à détecter les contours C du module central $M_{PV-C}$.

Le traitement comprend la binarisation de l'image réduite $IM_R$ et la détection des contours C du module central $M_{PV-C}$ sur l'image binarisée $IM_B$. La binarisation d'une image consiste à affecter une couleur blanche ou noire aux pixels de l'image en fonction de la valeur des pixels.

Par exemple, la binarisation de l'image réduite $IM_R$ est effectuée par un seuillage auto-adaptatif dont le seuil de décision est déterminé par la médiane et la moyenne des pixels de l'image réduite $IM_R$.

La détection des contours C du module central $M_{PV-C}$ est réalisée en considérant les limites blanches sur l'image qui décrivent un quadrilatère. Comme l'image contient un unique module photovoltaïque, on choisit le quadrilatère avec une aire supérieure à 60% et inférieure à 95%. Ainsi, les contours C détectés du module central $M_{PV-C}$ correspondent avantageusement à un quadrilatère ayant une aire comprise entre 60 % et 95 % de l'image binarisée $IM_B$.

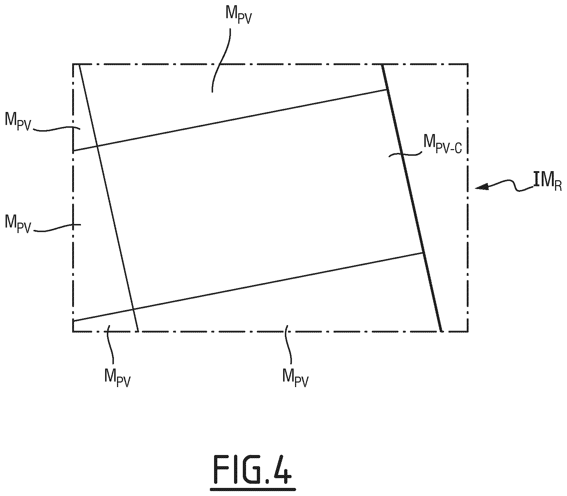

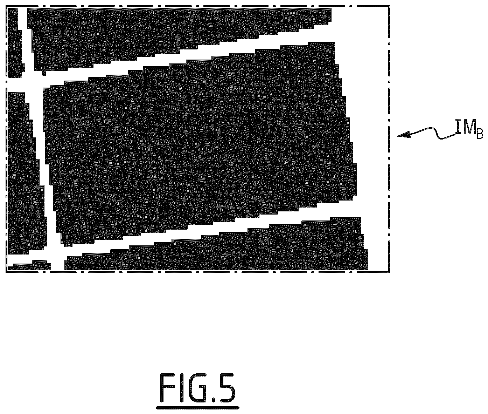

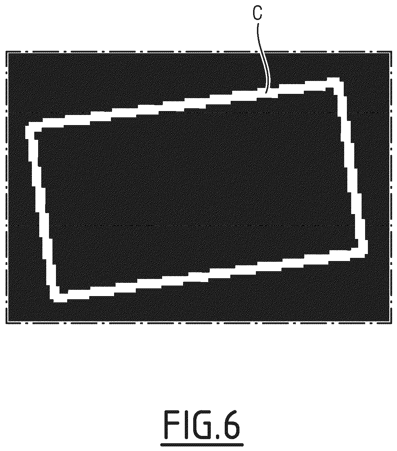

Un exemple d'une image réduite $IM_R$ correspondant à la forme agrandie est illustré par la figure 4 (le point de départ étant la figure 3). Un exemple d'une image binarisée $IM_B$ est illustré par la figure 5. Un exemple des contours C détectés du module photovoltaïque $M_{PV}$ cible est illustré par la figure 6.

De préférence, le traitement de l'image réduite $IM_R$ comprend, avant la binarisation, la transformation de l'image réduite $IM_R$ en niveaux de gris et le floutage de l'image transformée. Par exemple, après le passage de l'image en niveaux de gris, on considère un noyau (taille = 5% de l'image mais au minimum = 3). L'élément centrale du noyau est remplacé par la valeur médiane des pixels du noyau. Cette méthode permet de supprimer les bruits de type neige.

De préférence, le traitement de l'image réduite $IM_R$ comprend, avant la binarisation, le renforcement des contours blancs sur l'image floutée.

Par exemple, pour augmenter la continuité des contours, on effectue une convolution sur l'image avec un masque blanc de dimension 3x3. Les régions blanches limitrophes entre 1 pixel noir sont dilatées par la convolution, cela permet de fermer et renforcer les contours du module photovoltaïque $M_{PV}$ cible.

L'étape de détermination 300 comprend une sous-étape 330 de détermination d'un masque de contours Mc pour le module photovoltaïque $M_{PV}$ en fonction des contours C détectés pour le module central $M_{PV-C}$.

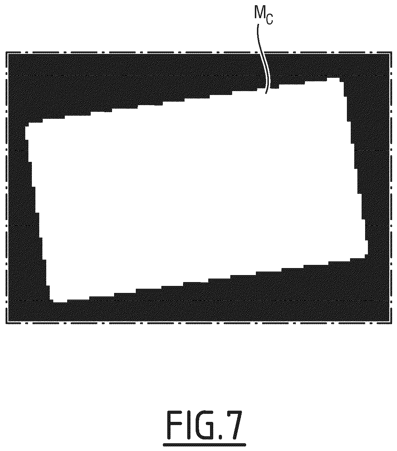

Le masque de contours Mc correspond à la surface délimitée par les contours C détectés du module photovoltaïque $M_{PV}$. Un exemple de masque de contours $M_C$ est illustré par la figure 7.

Le procédé de détection comprend une étape 400 d'application de chaque masque de contours Mc déterminé sur l'image initiale IM pour détecter de manière fine le module photovoltaïque $M_{PV}$ correspondant. L'étape 400 est mise en oeuvre par le calculateur 10 en interaction avec le produit programme d'ordinateur 12, c'est-à-dire est mise en oeuvre par ordinateur.

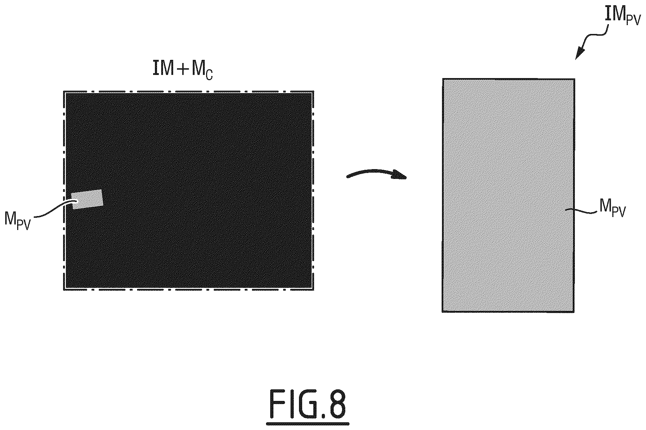

La figure 8 à gauche illustre la détection fine du module photovoltaïque $M_{PV}$ considéré en figure 3.

Optionnellement, le procédé de détection comprend une étape 500 d'extraction d'une image $IM_{PV}$ de chaque module photovoltaïque $M_{PV}$ en fonction du masque de contours $M_C$ dudit module photovoltaïque $M_{PV}$. L'étape 500 est mise en oeuvre par le calculateur 10 en interaction avec le produit programme d'ordinateur 12, c'est-à-dire est mise en oeuvre par ordinateur.

La figure 9 à droite illustre l'extraction de l'image $IM_{PV}$ d'un module photovoltaïque $M_{PV}$.

Optionnellement, le procédé de détection comprend une étape 600 d'application d'un ou plusieurs masques signature de défauts sur les images $IM_{PV}$ extraites afin d'identifier des défauts sur les modules photovoltaïques $M_{PV}$ détectés. L'étape 600 est mise en oeuvre par le calculateur 10 en interaction avec le produit programme d'ordinateur 12, c'est-à-dire est mise en oeuvre par ordinateur.

Optionnellement, le procédé de détection comprend une étape de maintenance des modules photovoltaïques $M_{PV}$ en fonction des défauts identifiés lors de l'étape 600.

Ainsi, le présent procédé permet par une détection en plusieurs étapes (grossière et fine) de détecter de manière précise des modules photovoltaïques $M_{PV}$, en particulier leurs contours C. Une étape clé est l'augmentation de la zone de détection (forme englobante F) du module photovoltaïque $M_{PV}$ sur l'image d'origine qui permet de s'assurer d'avoir la capture du module photovoltaïque $M_{PV}$ en totalité.

Un tel procédé permet de faciliter le domaine de la production d'électricité par des centrales photovoltaïques, notamment la surveillance, le diagnostic et l'aide décisionnelle lors du fonctionnement de ces centrales photovoltaïques.

L'homme du métier comprendra que les modes de réalisation et variantes précédemment décrits peuvent être combinés pour former de nouveaux modes de réalisation pourvu qu'ils soient compatibles techniquement.

**Revendications**

1. Procédé de détection de modules photovoltaïques ($M_{PV}$) sur une image, le procédé étant mis en oeuvre par ordinateur et comprenant les étapes suivantes :

   a. la réception d'une image initiale (IM) de modules photovoltaïques ($M_{PV}$),
   b. la détection grossière, par un modèle, d'au moins un module photovoltaïque ($M_{PV}$) imagé entièrement sur l'image initiale (IM) et la mise en évidence dudit module photovoltaïque ($M_{PV}$) sur l'image initiale (IM) par une forme englobante (F), la forme englobante (F) englobant au moins une partie du module photovoltaïque ($M_{PV}$),
   c. la détermination d'un masque de contours (Mc) pour chaque module photovoltaïque ($M_{PV}$) détecté sur l'image initiale (IM), l'étape de détermination comprenant pour chaque module photovoltaïque ($M_{PV}$) détecté :

      i. l'agrandissement de la forme englobante (F) d'un facteur prédéterminé de sorte à obtenir une forme, dite forme agrandie, englobant un seul module photovoltaïque ($M_{PV}$) dans son intégralité, dit module central ($M_{PV-C}$), le facteur prédéterminé étant choisi de sorte que la forme agrandie ait une surface inférieure à deux fois la surface d'un module photovoltaïque ($M_{PV}$),
      ii. le traitement d'une image, dite image réduite ($IM_R$), correspondant à la forme agrandie, le traitement comprenant la binarisation de l'image réduite ($IM_R$) et la détection des contours (C) du module central ($M_{PV-C}$) sur l'image binarisée ($IM_B$),

      iii. la détermination d'un masque de contours (Mc) pour le module photovoltaïque ($M_{PV}$) en fonction des contours (C) détectés pour le module central ($M_{PV-C}$), le masque de contours ($M_C$) correspondant à la surface délimitée par les contours (C) détectés du module photovoltaïque ($M_{PV}$),

   d. l'application de chaque masque de contours (Mc) déterminé sur l'image initiale (IM) pour détecter de manière fine le module photovoltaïque ($M_{PV}$) correspondant.

2. Procédé selon la revendication 1, dans lequel le modèle est un réseau de neurones qui a été préalablement entraîné sur une base de données comprenant des images de modules photovoltaïques ($M_{PV}$).

3. Procédé selon la revendication 1 ou 2, dans lequel le traitement de l'image réduite ($IM_R$) comprend la transformation de l'image réduite ($IM_R$) en niveaux de gris et le floutage de l'image transformée.

4. Procédé selon la revendication 3, dans lequel le traitement de l'image réduite ($IM_R$) comprend le renforcement des contours blancs sur l'image floutée.

5. Procédé selon l'une quelconque des revendications 1 à 4, dans lequel la binarisation de l'image réduite ($IM_R$) est effectuée par un seuillage auto-adaptatif dont le seuil de décision est déterminé par la médiane et la moyenne des pixels de l'image réduite ($IM_R$).

6. Procédé selon l'une quelconque des revendications 1 à 5, dans lequel les contours (C) détectés du module central ($M_{PV-C}$) correspondent à un quadrilatère ayant une aire comprise entre 60 % et 95 % de l'image binarisée ($IM_B$).

7. Procédé selon l'une quelconque des revendications 1 à 6, dans lequel le facteur prédéterminé est choisie de sorte que la forme agrandie ait une surface inférieure à deux fois la surface d'un module photovoltaïque ($M_{PV}$).

8. Procédé selon l'une quelconque des revendications 1 à 7, dans lequel l'agrandissement de la forme englobante (F) comprend l'agrandissement des côtés de la forme englobante (F) du facteur prédéterminé, de préférence le facteur prédéterminé étant égal à $\sqrt{2}$.

9. Procédé selon l'une quelconque des revendications 1 à 8, dans lequel le contraste de l'image initiale (IM) a été ajusté, avant l'étape de détection grossière, par un étalement d'histogramme adaptatif de l'image initiale (IM).

10. Procédé selon l'une quelconque des revendications 1 à 9, dans lequel le procédé comprend une étape d'extraction d'une image (IMPV) de chaque module photovoltaïque (MPV) en fonction du masque de contours (MC) dudit module photovoltaïque (MPV), et une étape d'application d'un ou plusieurs masques signature de défauts sur les images (IMPV) extraites afin d'identifier des défauts sur les modules photovoltaïques (MPV) détectés.

11. Produit programme d'ordinateur comprenant des instructions de programme enregistrées sur un support lisible par ordinateur, pour l'exécution d'un procédé de détection selon l'une quelconque des revendications 1 à 10 lorsque le programme d'ordinateur est exécuté sur un ordinateur.

## FIG.1

-100-

-200-

-300-

-320-

-330-

300

-400-

-500-

-600-

FIG.2

## FIG.3

$M_{PV}$

$M_{PV}$

$M_{PV}$

$M_{PV-C}$

$IM_R$

$M_{PV}$

$M_{PV}$

FIG.4

$IM_B$

# FIG.5

C

## FIG.6

FIG.7

IM+M_C

$M_{PV}$

$IM_{PV}$

$M_{PV}$

FIG.8

Europäisches Patentamt

European Patent Office

Office européen des brevets

# RAPPORT DE RECHERCHE EUROPEENNE

Numéro de la demande

EP 24 21 6178

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LIN Y.: "SOLAR PHOTOVOLTAIC POWER PLANT INVENTORY AND SOLAR MODULES COUNTING BY CONVOLUTIONAL NEURAL NETWORK FROM AERIAL IMAGERY", 33RD EUROPEAN PHOTOVOLTAIC SOLAR ENERGY CONFERENCE AND EXHIBITION, PROCEEDINGS OF THE INTERNATIONAL CONFERENCE, WIP-RENEWABLE ENERGIES, SYLVENSTEINSTR. 2 81369 MUNICH, GERMANY, 10 septembre 2021 (2021-09-10), XP040721800, ISBN: 978-3-936338-47-8 * le document en entier * ----- | 1-11 | INV. G06V10/28 G06V10/44 G06V10/82 G06V20/60 G06T7/00 G06T7/13 G06T7/12 G06T7/136 |
| A | CN 114 332 020 A (CHINESE SCIENCE AND TECHNOLOGY UNIV) 12 avril 2022 (2022-04-12) * le document en entier * ----- | 1-11 | |
| A | GUO MINGCHAO: "Research on segmentation algorithm of rooftop distributed PV arrays based on deep learning", PROCEEDINGS OF THE SPIE, SPIE, US, vol. 12473, 18 novembre 2022 (2022-11-18), pages 124731C-124731C, XP060168332, ISSN: 0277-786X, DOI: 10.1117/12.2653426 ISBN: 978-1-5106-5738-0 * le document en entier * ----- | 1-11 | DOMAINES TECHNIQUES RECHERCHES (IPC) G06V G06T |

-/--

Le présent rapport a été établi pour toutes les revendications

| Lieu de la recherche | Date d'achèvement de la recherche | Examinateur |
|---|---|---|
| La Haye | 17 février 2025 | Martinez, Francis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................
& : membre de la même famille, document correspondant

EPO FORM 1503 03.82 (P04C02)

page 1 de 2

**EP 4 564 309 A1**

Europäisches
Patentamt

European
Patent Office

Office européen
des brevets

# RAPPORT DE RECHERCHE EUROPEENNE

Numéro de la demande

EP 24 21 6178

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ANTONIO DI TOMMASO: "A multi-stage model based on YOLOv3 for defect detection in PV panels based on IR and visible imaging by unmanned aerial vehicle", RENEWABLE ENERGY , vol. 193 1 juin 2022 (2022-06-01), pages 941-962, XP093155080, GB ISSN: 0960-1481, DOI: 10.1016/j.renene.2022.04.046 Extrait de l'Internet: URL:https://pdf.sciencedirectassets.com/27 1431/1-s2.0-S0960148122X00098/1-s2.0-S0960 148122005079/main.pdf?X-Amz-Security-Token =IQoJb3JpZ2luX2VjECgaCXVzLWVhc3QtMSJHMEUCI QCwlT45bCEO+Wew0Loll6SMhoGe0r8yFLrhUVIVq4u k9gIgWGYWs9H+4UQRzjIYZ6aYKyf1db2ihEhgRfauw sI8QhUqswUIcBAFGgwwNTkwMDM1NDY4NjUiDIa9VIO iCL8L8/mkp * le document en entier * ----- | 1-11 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 17 février 2025 | Martinez, Francis |

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 21 6178

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2025

| Document brevet cité au rapport de recherche | Date de publication | Membre(s) de la famille de brevet(s) | Date de publication |
|---|---|---|---|
| CN 114332020 A | 12-04-2022 | AUCUN | |

Pour tout renseignement concernant cette annexe : voir Journal Officiel de l'Office européen des brevets, No.12/82